# EUROPÄISCHE PATENTSCHRIFT

(11) **EP 3 580 499 B1**
(45) Veröffentlichungstag und Bekanntmachung des Hinweises auf die Patenterteilung: **10.06.2020**
(21) Anmeldenummer: 18724123.7
(22) Anmeldetag: 25.04.2018
(51) Int. Cl.: F24F 13/08, F24F 13/02, E04F 17/04, F16L 43/00

(54) **ROHRBOGEN FÜR FLUIDKANÄLE**
ELBOW DUCT ELEMENT FOR FLUID PASSAGE
GAINE COUDÉ POUR PASSAGE DE FLUIDE

(30) Priorität: 09.05.2017 DE 202017102748 U
(43) Veröffentlichungstag der Anmeldung: 18.12.2019
(73) Patentinhaber: Naber Holding GmbH & Co. KG, 48529 Nordhorn (DE)
(72) Erfinder: NABER, Hans-Joachim, 48527 Nordhorn (DE)
(74) Vertreter: Angerhausen, Christoph
(86) Internationale Anmeldenummer: PCT/DE2018/100398
(87) Internationale Veröffentlichungsnummer: WO 2018/206046

(56) Entgegenhaltungen:
- DE-B- 1 261 715
- DE-B3- 10 360 839
- DE-U1- 9 001 554

## Beschreibung

Die Erfindung geht aus von einem Rohrbogen für Fluidkanäle, der in seinem Innern mindestens ein Luftleitelement aufweist. Ein solcher Rohrbogen ist aus der DE 20 2005 017 821 U1 bekannt.

Derartige Rohrbögen bilden einen wesentlichen Bestandteil von Fluidkanälen, die in Gebäuden aller Art insbesondere in Form von Flachkanälen mit rechteckigem Querschnitt zur Belüftung und Entlüftung eingesetzt werden, wobei eine bevorzugte Anwendung Abluftkanäle für Dunstabzugshauben im Küchenbereich sind.

Diese Rohrbögen sind häufig als Kunststoffbauteile ausgebildet, was neben den günstigen Material- und Herstellungskosten auch Vorteile bei der Montage der Luftleitlamellen im Innern des Rohrbogens hat. Zu letzterem schlägt die Lehre der DE 20 2005 017 821 U1 vor, den Rohrbogen zweischalig auszubilden, wobei für die Befestigung der beiden Rohrbogenschalen aneinander gegenüberliegende Schnittkanten sowohl des Rohrbogens als auch der Luftleitelemente miteinander verbunden werden. Die DE 1 261 715B1 offenbart einen Rohrbogen mit einem Luftleitelement in seinem Innern gemäß dem Oberbegriff des Anspruchs 1.

Aus brandschutztechnischen Gründen ist es jedoch wünschenswert, dass derartige Rohrbögen mit Luftleitelementen auch als Metallkanäle zur Verfügung stehen, die auf die Verwendung brennbarer Materialien wie Kunststoff verzichten. Die zweischalige Ausbildung von Metallrohrbögen analog zu der Lehre der DE 20 2005 017 821U1 wäre jedoch herstellungsseitig sehr aufwendig und damit würden die Rohrbögen entsprechend teuer in der Anschaffung.

Die Herstellung von einteiligen Rohrbögen mit Luftleitlamellen ist wiederum dadurch erschwert, dass für das Verschweißen der Luftleitlamellen im Rohrbogen diese exakt vorpositioniert und gehalten werden müssen, was sehr aufwändig ist.

Es ist daher die Aufgabe der Erfindung, einen Rohrbogen mit mindestens einem Luftleitelement der eingangs beschriebenen Art vorzuschlagen, der auch als Metallkanal kostengünstig hergestellt werden kann.

Diese Aufgabe wird durch einen Rohrbogen mit dem Merkmal des Anspruchs 1 gelöst. Die abhängigen Ansprüche betreffen jeweils vorteilhafte Ausführungsformen der Erfindung.

Demgemäß ist vorgesehen, dass der Rohrbogen einen Blechkanal aufweist, der an Innenseiten gegenüberliegender Wandabschnitte jeweils eine bogenförmige Vertiefung aufweist, in die das Luftleitelement mit an gegenüberliegenden Außenseiten ausgebildeten Formschlussansätzen hineinragt.

Dadurch wird erreicht, dass auch standardmäßig vorhandene Blechkanäle, beispielsweise 90°-Rohrbögen, insbesondere in Form eines Flachkanalbogens, als Ausgangsprodukt verwendet werden können, bei denen an den gegenüberliegenden Wandabschnitten nachträglich, beispielsweise durch Prägen oder Stanzen, jeweils mindestens eine bogenförmige Vertiefung eingebracht wird. Die Erfindung macht sich somit die gegenüber Kunststoffkanälen gute Nachbearbeitbarkeit von Metall, insbesondere von Metallblech zu Nutze. Aufgrund der Flexibilität von Metallblech kann das Luftleitelement unter einem Formschluss und gegebenenfalls unter Vorspannung in die gegenüberliegenden bogenförmigen Vertiefungen nachträglich eingebracht werden, so dass das Luftleitelement in Bezug auf den Blechkanal exakt vorpositioniert ist. Gegebenenfalls kann das in zuvor beschriebener Weise vorpositionierte Luftleitelement mit dem Blechkanal verklebt oder verschweißt werden.

Die bogenförmige Vertiefung kann eine elliptische Form aufweisen. Die bogenförmige Vertiefung kann beispielsweise eine Stanzung oder eine Prägung sein. Auch das Luftleitelement selbst kann vorzugsweise ausschließlich aus Blech bestehen, wobei es aufgrund seiner Eigenflexibilität viel besser als bei den aus dem Stand der Technik bekannten Kunststoff-Luftleitelementen dazu geeignet ist, gegebenenfalls unter Vorspannung nachträglich in einen Blechkanal mit gegebenenfalls vorher eingebrachten bogenförmigen Vertiefungen eingesetzt zu werden, so dass die Formschlussansätze an den gegenüberliegenden Außenseiten des Luftleitelements mit den bogenförmigen Vertiefungen in Eingriff treten und gegebenenfalls unter Ausbildung eines Formschlusses das Luftleitelement gegenüber dem Blechkanal vorpositionieren.

Die gegenüberliegenden Wandabschnitte können Blechwände und die bogenförmigen Vertiefungen Prägungen der Blechwände sein, wobei die Prägungen an einer Innenseite der jeweiligen Blechwand als eine Vertiefung und an einer Außenseite der Blechwand als eine Erhebung ausgebildet sein können.

Insbesondere dann, wenn der Blechkanal aus Dünnblech besteht, wird durch die Einbringung der bogenförmigen Vertiefung eine zusätzliche Stabilisierung des Blechkanals erreicht.

Die bogenförmige Vertiefung kann beispielsweise eine kontinuierliche oder eine unterbrochene Nut sein, die zur Innenseite des Blechkanals hin geöffnet ist. Die Nut kann beispielsweise einen Winkelbereich von im Wesentlichen 90° umspannen. Die bogenförmige Vertiefung ist jedoch grundsätzlich auf keine bestimmten Abmessungen beschränkt, so lange sie dazu geeignet ist, im Zusammenwirken mit den Formschlussansätzen des Luftleitelements das Luftleitelement in Bezug auf den Blechkanal im Inneren des Blechkanals exakt vorzupositionieren.

Das Luftleitelement kann ein U-förmiger Einsatz sein, mit einer Luftleitlamelle und zwei an gegenüberliegenden parallelen Längsrändern der Luftleitlamelle angeformten Befestigungsabschnitten, über die der U-förmige Einsatz an gegenüberliegenden Wandabschnitten des Blechkanals anliegt und festgelegt ist.

Das Luftleitelement kann beispielsweise ein durch Stanzen und Kanten erhältliches Blechformteil sein.

Die Befestigungsabschnitte des Luftleitelements können sich im Wesentlichen senkrecht zu der Luftleitlamelle erstrecken. Dadurch kann erreicht werden, dass die Befestigungsabschnitte vollflächig oder im Wesentlichen vollflächig an den gegenüberliegenden Innenseiten des Blechkanals anliegen und damit den Blechkanal stabilisieren.

Die Befestigungsabschnitte können jeweils einen Formschlussansatz aufweisen, der sich senkrecht zu dem jeweiligen Befestigungsabschnitt von dem Befestigungsabschnitt erhebt.

Die gegenüberliegenden Wandabschnitte des Blechkanals können zumindest abschnittsweise von den Befestigungsabschnitten gedoppelt und über die Luftleitlamelle gegeneinander versteift sein. Auch insoweit wird eine Versteifung des Blechkanals mit Hilfe des Luftleitelements erreicht, so dass die Blechdicke des Blechkanals weiter herabgesetzt und damit die Herstellungskosten des Rohrbogens verringert werden können. Demgemäß ist es insbesondere möglich, dass der Blechkanal des Rohrbogens aus Dünnblech besteht.

Das Luftleitelement kann über die in die bogenförmigen Vertiefungen eingreifenden Formschlussansätze gegenüber dem Blechkanal vorpositioniert sein. Dies vereinfacht die Herstellung des Rohrbogens insoweit, als dass das in zuvor beschriebener Weise gegenüber dem Blechkanal vorpositionierte Luftleitelement mit technisch einfachen Mitteln mit dem Blechkanal kraftschlüssig verbunden, beispielsweise verschweißt oder verklebt werden kann.

Der Blechkanal kann einen rechteckigen Querschnitt aufweisen, wobei die gegenüberliegenden Wandabschnitte ein erstes Paar parallel beabstandeter Wandabschnitte sind, die von einem zweiten Paar parallel beabstandeter Wandabschnitte zu dem Blechkanal mit rechteckigem Querschnitt verbunden sind.

Weitere Einzelheiten der Erfindung werden anhand der nachstehenden Figuren erläutert. Dabei zeigt:
- Figur 1: in perspektivischer Darstellung eine erste Ausführungsform eines erfindungsgemäßen Rohrbogens mit entnommener Luftleitlamelle;
- Figur 2: eine Seitenansicht des Rohrbogens gemäß Figur 1; und
- Figur 3: die Querschnittsansicht einer Luftleitlamelle, die in Verbindung mit einem Rohrbogen nach den Figuren 1 und 2 verwendet werden kann.

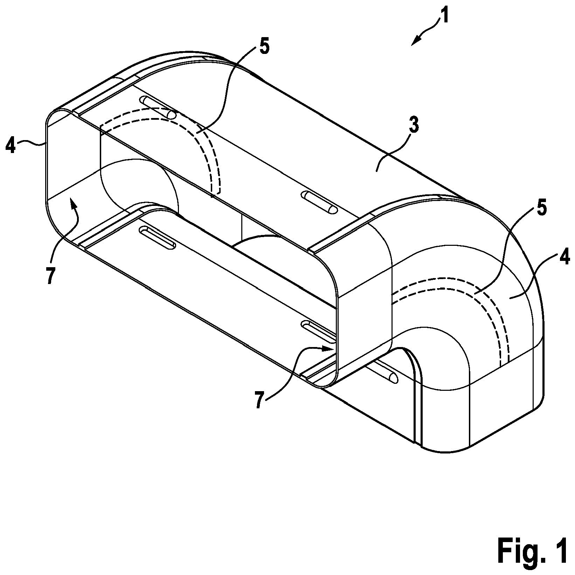

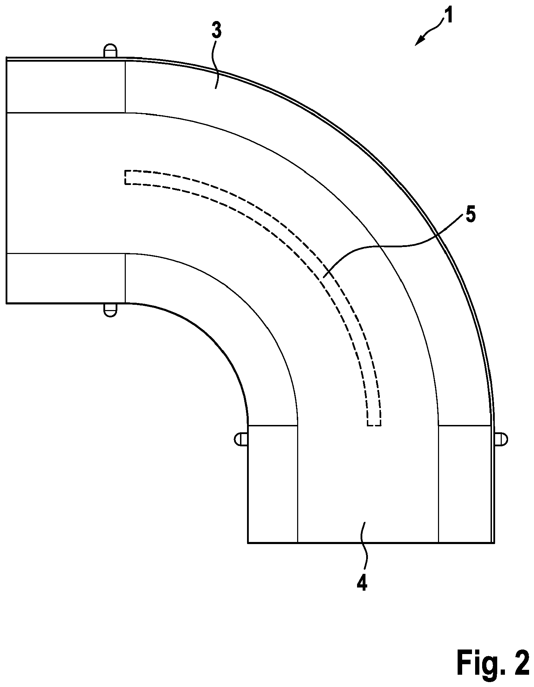

Die Zusammenschau der Figuren 1 bis 3 zeigt einen Rohrbogen, der als 90°-Umlenkstück mit rechteckigem Leitungsquerschnitt ausgebildet ist. Ein gattungsgemäßes 90°-Umlenkstück ist grundsätzlich aus der DE 20 2005 017 821 U1 bekannt.

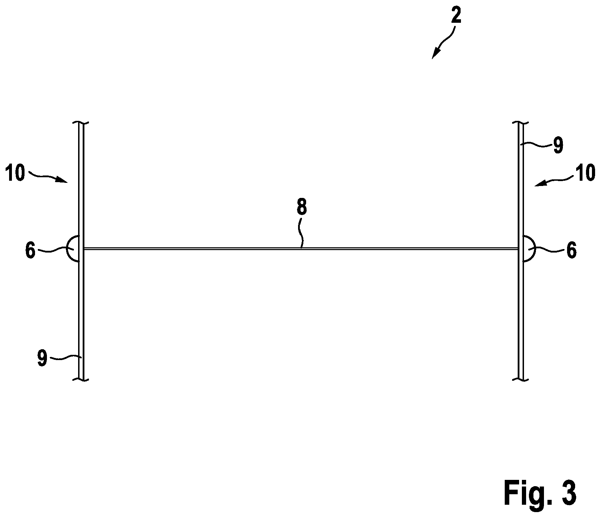

Gegenüber dem Stand der Technik ist der in den Figuren gezeigte Rohrbogen jedoch als ein Metallkanal ausgebildet, wobei der Rohrbogen 1 insbesondere einen Blechkanal 3 aufweist, der an seinen Innenseiten 7 gegenüberliegender Wandabschnitte 4 jeweils eine bogenförmige Vertiefung 5 aufweist, in die das Luftleitelement 2 gemäß Figur 3 mit seinen an gegenüberliegenden Außenseiten 10 ausgebildeten Formschlussansätzen 6 hineinragen kann und somit das Luftleitelement 2 gegenüber dem Blechkanal 3 vorpositioniert. Statt einer bogenförmige Vertiefung 5 können auch mehrere bogenförmige Vertiefungen 5 und dementsprechend mehrere Formschlussansätze 6 vorgesehen sein.

Die Formschlussansätze 6 sowie die bogenförmigen Vertiefungen 5 können insbesondere dazu ausgebildet sein, im Zuge des Einsetzens des Luftleitelements 2 in den Blechkanal 3 das Luftleitelement 2 in Bezug auf den Blechkanal 3 in einer gewünschten Position vorauszurichten. Dazu können die Formschlussansätze 6 sowie eine Innengeometrie der bogenförmigen Vertiefung 5 zumindest abschnittsweise formschlüssig und gegebenenfalls mit einer Anlaufkontur ausgebildet sein.

Die bogenförmigen Vertiefungen 5 sind insbesondere durch Stanzen oder Prägen eines handelsüblichen Blechkanals 3 erhältlich. Dazu kann durch ein geeignetes Prägewerkzeug von der Innenseite 7 der gegenüberliegenden Wandabschnitte 4 im Bereich der bogenförmigen Vertiefung 5 das Blech des jeweiligen Wandabschnitts 4 nach außen getrieben werden.

Auch das in Figur 3 gezeigte Luftleitelement 2 kann als ein Blechformteil ausgebildet sein, welches neben seiner Luftleitlamelle 8 an gegenüberliegenden Längskanten jeweils einen angeformten Befestigungsabschnitt 9 aufweist. An den von der Luftleitlamelle 8 abgewandten Außenseiten 10 der Befestigungsabschnitte 9 ist jeweils ein Formschlussansatz 6 ausgebildet, über welchen das Luftleitelement 2 in jeweils eine der beiden bogenförmigen Vertiefungen 5 in den gegenüberliegenden Wandabschnitten 4 des Blechkanals 3 eingreift.

Die Außenseiten 10 der Befestigungsabschnitte 9 können eine Kontur aufweisen, welche im Wesentlichen einer Kontur der Innenseite 7 der Wandabschnitte 4 entspricht, so dass die Befestigungsabschnitte 9 zumindest über einen wesentlichen Anteil ihrer Fläche formschlüssig an der Innenseite 7 der Wandabschnitte 4 anliegen.

Die Abmessung und Geometrie der Luftleitlamelle 8 des Luftleitelements 2 kann derart bemessen und ausgebildet sein, dass das Luftleitelement 2 unter einer Vorspannung in den Blechkanal 3 eingesetzt wird, wobei insbesondere die Befestigungsabschnitte 9 gegen die Innenseite 7 der Wandabschnitte 4 gedrückt werden und damit der Blechkanal 3 insgesamt stabilisiert wird.

Abweichend von der in Figur 3 gezeigten Ausführungsform des Luftleitelements 2 kann dieses auch als ein im Wesentlichen U-förmiger Einsatz ausgebildet sein, bei dem die Luftleitlamelle 8 die Befestigungsabschnitte 9 an gegenüberliegenden oberen Rändern miteinander verbindet, so dass die Befestigungsabschnitte 9 mit der Luftleitlamelle 8 im Querschnitt eine U-Form aufweisen.

### Bezugszeichenliste

- 1: Rohrbogen
- 2: Luftleitelement
- 3: Blechkanal
- 4: Wandabschnitte
- 5: Vertiefung
- 6: Formschlussansätze
- 7: Innenseite
- 8: Luftleitlamelle
- 9: Befestigungsabschnitt
- 10: Außenseite

## Patentansprüche

1. Rohrbogen (1) für Fluidkanäle, wobei der Rohrbogen (1) in seinem Innern ein Luftleitelement (2) aufweist, **dadurch gekennzeichnet, dass** der Rohrbogen (1) einen Blechkanal (3) aufweist, der an Innenseiten (7) gegenüberliegender Wandabschnitte (4) jeweils eine bogenförmige Vertiefung (5) aufweist, in die das Luftleitelement (2) mit an gegenüberliegenden Außenseiten (10) ausgebildeten Formschlussansätzen (6) hinein ragt.

2. Rohrbogen (1) nach Anspruch 1, bei dem die bogenförmige Vertiefung (5) eine elliptische Form aufweist.

3. Rohrbogen (1) nach Anspruch 1 oder 2, bei dem die bogenförmige Vertiefung (5) eine Stanzung oder eine Prägung ist.

4. Rohrbogen (1) nach einem der vorangegangen Ansprüche, bei dem die gegenüberliegenden Wandabschnitte (4) Blechwände und die bogenförmigen Vertiefungen (5) Prägungen der Blechwände sind, wobei die Prägungen an einer Innenseite (7) der jeweiligen Blechwand als eine Vertiefung (5) und an einer Außenseite der Blechwand als eine Erhebung ausgebildet sind.

5. Rohrbogen (1) nach einem der vorangegangen Ansprüche, bei dem die bogenförmige Vertiefung (5) eine kontinuierliche oder eine unterbrochene Nut ist, die einen Winkelbereich von im Wesentlichen 90° umspannt.

6. Rohrbogen (1) nach einem der vorangegangen Ansprüche, bei dem das Luftleitelement (2) ein U-förmiger Einsatz ist, mit einer Luftleitlamelle (8) und zwei an gegenüberliegenden parallelen Längsrändern der Luftleitlamelle (8) angeformten Befestigungsabschnitten (9), über die der U-förmige Einsatz an gegenüberliegenden Wandabschnitten (4) des Blechkanals (3) anliegt und festgelegt ist.

7. Rohrbogen (1) nach Anspruch 6, bei dem sich die Befestigungsabschnitte (9) im Wesentlichen senkrecht zu der Luftleitlamelle (8) erstrecken.

8. Rohrbogen (1) nach Anspruch 6 oder 7, bei dem die Befestigungsabschnitte (9) jeweils einen Formschlussansatz (6) aufweisen, der sich senkrecht zu dem jeweiligen Befestigungsabschnitt (9) von dem Befestigungsabschnitt (9) erhebt.

9. Rohrbogen (1) nach einem der Ansprüche 6 bis 8, bei dem die gegenüberliegenden Wandabschnitte (4) des Blechkanals (3) zumindest abschnittsweise von den Befestigungsabschnitten (9) gedoppelt und über die Luftleitlamelle (8) zueinander versteift sind.

10. Rohrbogen (1) nach einem der vorangegangen Ansprüche, bei dem der Blechkanal (3) aus Dünnblech besteht.

11. Rohrbogen (1) nach einem der vorangegangen Ansprüche, bei dem das Luftleitelement (2) über die in die bogenförmigen Vertiefungen (5) eingreifenden Formschlussansätze (6) gegenüber dem Blechkanal (3) vorpositioniert sind.

12. Rohrbogen (1) nach Anspruch 10, bei dem das über die in die bogenförmigen Vertiefungen (5) eingreifenden Formschlussansätze (6) gegenüber dem Blechkanal (3) vorpositionierte Luftleitelement (2) mit dem Blechkanal (3) kraftschlüssig verbunden, insbesondere verschweißt oder verklebt ist.

13. Rohrbogen (1) nach einem der vorangegangen Ansprüche, bei dem der Blechkanal (3) einen rechteckigen Querschnitt aufweist, bei denen die gegenüberliegenden Wandabschnitte (4) parallel beabstandete Wandabschnitte (4) sind, die von einem zweiten Paar paralleler Wandabschnitte (4) zu dem Blechkanal (3) mit rechteckigem Querschnitt verbunden sind.

## Claims

1. Elbow duct element (1) for fluid passages, the elbow duct element (1) having an air guide element (2) in its interior, **characterized in that** the elbow duct element (1) comprises a sheet metal channel (3), which has on inner sides (7) of opposing wall sections (4) an arc-shaped recess (5) each, in which the air guide element (2) projects with positive-locking projections (6) formed on opposing outer sides (10).

2. The elbow duct element (1) according to claim 1, in which the arc-shaped recess (5) has an elliptical shape.

3. The elbow duct element (1) according to claim 1 or 2, in which the arc-shaped recess (5) is a punching or stamping.

4. The elbow duct element (1) according to any of the preceding claims, in which the opposing wall sections (4) are sheet metal walls and the arc-shaped recesses (5) are stampings of the sheet metal walls, wherein the stampings are formed on an inner side (7) of the respective sheet metal wall as a recess (5) and on an outer side of the sheet metal wall as a rising.

5. The elbow duct element (1) according to any of the preceding claims, in which the arc-shaped recess (5) is a continuous or discontinuous groove, which spans an angular range of substantially 90°.

6. The elbow duct element (1) according to any of the preceding claims, in which the air guide element (2) is an U-shaped insert, with an air vane (8) and two fastening sections (9) formed on opposing parallel longitudinal edges of the air vane (8), via which the U-shaped insert bears against opposing wall sections (4) and is fixed.

7. The elbow duct element (1) according to claim 6, in which the fastening sections (9) extend substantially perpendicular to the air vane (8).

8. The elbow duct element (1) according to claim 6 or 7, in which the fastening sections (9) comprise a positive-locking projection (6) each, which rises from the fastening section (9) perpendicular to the respective fastening section (9).

9. The elbow duct element (1) according to any of claims 6 to 8, in which the opposing wall sections (4) of the sheet metal channel (3) at least in sections are doubled by the fastening sections (9) and stiffened to each other via the air vane (8).

10. The elbow duct element (1) according to any of the preceding claims, in which the sheet metal channel (3) consists of thin sheet.

11. The elbow duct element (1) according to any of the preceding claims, in which the air guide element (2) is prepositioned with respect to the sheet metal channel (3) via the positive-locking protrusions (6) engaging in the arc-shaped recesses (5).

12. The elbow duct element (1) according to claim 10, in which the air guide element (2) prepositioned with respect to the sheet metal channel (3) via the positive-locking protrusions (6) engaging in the arc-shaped recesses (5) is connected to the sheet metal channel (3) in a force-fitting manner, particularly welded or glued.

13. The elbow duct element (1) according to any of the preceding claims, in which the sheet metal channel (3) has a rectangular cross section, in which the opposing wall sections (4) are parallelly spaced apart wall sections (4), which are connected by a second pair of parallel wall sections (4) as the sheet metal channel (3) with rectangular cross section.

## Revendications

1. Tuyau coudé (1) pour des canaux de fluides, le tuyau coudé (1) comprenant, à l'intérieur, un élément de guidage d'air (2), **caractérisé en ce que** le tuyau coudé (1) comprend un canal en tôle (3) qui comprend, sur des côtés internes (7) de portions de paroi (4) opposées, une cavité en forme d'arc de cercle (5) dans laquelle dépasse l'élément de guidage d'air (2) avec des embouts de complémentarité de forme (6) réalisés dans des côtés externes (10) opposés.

2. Tuyau coudé (1) selon la revendication 1, dans lequel la cavité en forme d'arc de cercle (5) présente une forme elliptique.

3. Tuyau coudé (1) selon la revendication 1 ou 2, dans lequel la cavité en forme d'arc de cercle (5) est un poinçonnage ou un estampage.

4. Tuyau coudé (1) selon l'une des revendications précédentes, dans lequel les portions de paroi (4) opposées sont des parois en tôle et les cavités en forme de coudes (5) sont des estampages des parois en tôle, les estampages étant réalisés sur un côté interne (7) de la paroi en tôle correspondante sous la forme d'une cavité (5) et sur un côté externe de la paroi en tôle sous la forme d'un bossage.

5. Tuyau coudé (1) selon l'une des revendications précédentes, dans lequel la cavité en forme d'arc de cercle (5) est une rainure continue ou interrompue qui s'étend sur une plage angulaire globale de 90°.

6. Tuyau coudé (1) selon l'une des revendications précédentes, dans lequel l'élément de guidage d'air (2) est un insert en forme de U avec une lamelle de guidage d'air (8) et deux portions de fixation (9) moulées sur les bords longitudinaux parallèles opposés de la lamelle de guidage d'air (8), par l'intermédiaire desquelles l'insert en forme de U s'appuie contre les portions de paroi (4) opposées du canal de tôle (3) et est fixé.

7. Tuyau coudé (1) selon la revendication 6, dans lequel les portions de fixation (9) s'étendent globalement perpendiculairement à la lamelle de guidage d'air (8).

8. Tuyau coudé (1) selon la revendication 6 ou 7, dans lequel les portions de fixation (9) comprennent chacune un embout de complémentarité de forme (6) qui s'élève perpendiculairement à la portion de fixation (9) correspondante à partir de la portion de fixation (9).

9. Tuyau coudé (1) selon l'une des revendications 6 à 8, dans lequel les portions de paroi (4) opposées du canal de tôle (3) sont doublées au moins à certains endroits par les portions de fixation (9) et rigidifiées entre elles par l'intermédiaire de la lamelle de guidage d'air (8).

10. Tuyau coudé (1) selon l'une des revendications précédentes, dans lequel le canal en tôle (3) est constitué d'une tôle mince.

11. Tuyau coudé (1) selon l'une des revendications précédentes, dans lequel l'élément de guidage (2) est pré-positionné par l'intermédiaire des embouts de complémentarité de forme (6) s'emboîtant dans les cavités en forme d'arc de cercle (5) par rapport au canal en tôle (3).

12. Tuyau coudé (1) selon la revendication 10, dans lequel l'élément de guidage d'air (2), pré-positionné par rapport au canal de tôle (3) par l'intermédiaire des embouts de complémentarité de forme (6) s'emboîtant dans les cavités en forme d'arc de cercle (5), est relié par force, plus particulièrement soudé ou collé, avec le canal de tôle (3).

13. Tuyau coudé (1) selon l'une des revendications précédentes, dans lequel le canal de tôle (3) présente une section rectangulaire, les portions de paroi (4) opposées étant des portions de paroi (4) distantes parallèles qui sont reliées par une deuxième paire de portions de paroi (4) au canal de tôle (3) avec une section rectangulaire.
